(19) Europäisches Patentamt
European Patent Office
Office européen des brevets

(11) EP 0 463 932 B1

(12) **EUROPEAN PATENT SPECIFICATION**

(45) Date of publication and mention of the grant of the patent:
**07.08.1996 Bulletin 1996/32**

(51) Int Cl.[6]: **C08G 69/32**, C08G 69/26

(21) Application number: **91401639.9**

(22) Date of filing: **18.06.1991**

(54) **Aromatic copolyamides and a process for producing them**

Aromatische Copolyamide und Verfahren zu ihrer Herstellung

Copolyamides aromatiques et leur procédé de préparation

(84) Designated Contracting States:
**DE FR GB**

(30) Priority: **20.06.1990 JP 161528/90**

(43) Date of publication of application:
**02.01.1992 Bulletin 1992/01**

(73) Proprietor: **Showa Shell Sekiyu Kabushiki Kaisha
Tokyo (JP)**

(72) Inventor: **Koide, Shunichi c/o SHOWA SHELL
Chiyoda-ku TOKYO 100 (JP)**

(74) Representative: **Bourgognon, Jean-Marie et al
Cabinet Flechner
22, Avenue de Friedland
75008 Paris (FR)**

(56) References cited:
**EP-A- 0 459 056**
**FR-A- 2 240 249**
**US-A- 4 012 365**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to new linear aromatic copolyamides, and more particularly it relates to melt-moldable linear aromatic copolyamides which have a high glass transition temperature, an excellent thermal resistance and a high elastic modulus and are excellent in molding properties and mechanical strength and a process for producing them.

Aliphatic polyamides such as nylon 6 or nylon 6,6 are used in various applications owing to their easy molding properties, but they are, however, inferior in thermal resistance.

On the other hand, aromatic polyamides obtained from aliphatic diamines such as hexamethylenediamine and aromatic dicarboxylic acids such as terephthalic acid, notwithstanding their excellent thermal resistance, have a defect that they are impossible to be melt-molded.

The object of the present invention is to provide an aromatic copolyamide which is capable of melt-molding and has a superior thermal stability and excellent mechanical properties.

The feature of the present invention is a process as defined in claim 1.

The condensation reaction can be conducted by a method such as melt condensation or interfacial polycondensation.

For example, in the melt condensation method, polymerization is conducted by heatinq an aqueous diamine salt mixture under a gauge pressure of 0.276-1.034 $10^6$Pa (40-150 lb/in$^2$) to remove water, maintaining said pressure to prepare a low polymer and then releasing the pressure to raise the temperature up to the melting point of the polymer or more.

Also, in the interfacial polycondensation method, an aqueous solution of diamines and an organic solvent solution of an aromatic dicarboxylic acid halide are catalytically reacted in the presence of an acid receptor.

As the aqueous medium used for dissolving the diamines, there are usually used water. The concentration of the diamines in said aqueous medium, though it it not critical, is generally in the range of 0.01 - 0.5 mole/ℓ, preferably 0.03 - 0.2 mole/ℓ.

Moreover, the aqueous phase preferably contains a neutralizing agent to catch and neutralize hydrogen chloride as a by-product of the polycondensation reaction. Such a neutralizing agent includes hydroxides, carbonates or hydrogen carbonates of alkali metals or alkaline earth metals such as sodium hydroxide, potassium hydroxide, calcium hydroxide, barium hydroxide, sodium carbonate, potassium carbonate, or sodium hydrogencarbonate , preferably sodium hydroxide. These neutralizing agent can be contained in the aqueous phase generally in a concentration of 0.05 - 1 mole, preferably 0.1 - 0.5 mole.

Also, as the aromatic dicarboxylic acid halide and the 2,7-naphthalene dicarboxylic acid, there may be mentioned either the chloride, bromide or fluoride, among which the chloride is preferred. The organic solvents which can be used for dissolving the acid halide components include, for example, halogenated aliphatic hydrocarbons such as dichloromethane, chloroform, 1,2-dichloroethane, or sym-tetrachloroethane, and aromatic hydrocarbons such as benzene, toluene, anisole, chlorobenzene, acetophenone, benzonitrile, or nitrobenzene , among which chloroform and toluene are preferred. The concentration of said naphthalene dicarboxylic acid halide in these solvents is not critical, but the total concentration of the aromatic dicarboxylic acid halide and the 2,7-naphthalene dicarboxylic acid halide are preferably in the range of 0.01 - 0.5 mole/ℓ, particularly 0.03 - 0.2 mole/ℓ.

Typical examples of $H_2N\text{-}R_1\text{-}NH_2$ and $H_2N\text{-}R_2\text{-}NH_2$ include 1,6-diaminohexane, 1,7-diaminoheptane, 1,8-diaminooctane, 1,6-diamono-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-1,5-dimethyloctane, 1,8-diamino-2,2-dimethyloctane, 1,6-diamino-3,3-dimethyloctane, 1,8-diamino-4,4-dimethyloctane, 1,6-diamino-2,4-diethylhexane, 1,11-diaminoundecane, or 1,12-diaminododecane.

Among these diamines, there are preferably used 1,6-diaminohexane, 1,8-diaminooctane, 1,10-diaminodecane, 1,12-diaminododecane or a mixture of the two or more of them, particularly 1,6-diaminohexane.

The present invention is further specifically explained with reference to examples.

Physical properties were measured in accordance with the following methods.

<u>Viscosity η inh:</u>

A polymer sample (0.1 g) is dissolved in 20 ml of sulfuric acid (0.5 g/dl), and a 10 ml portion of the solution is filled in an Ostwald viscometer, which is placed in a constant temperature bath at 30 °C for measuring the time of falling a ball (t). The measurement is performed with only a solvent in the similar manner ($t_0$). The inherent viscosity is calculated from the following equation:

$$\eta\ inh = \ln (t/t_0)/0.5$$

Note: Viscosity is measured with a viscometer which gives as a measure of the time $T_0$ ca. 120 seconds.

Glass transition temperature ($T_g$), melting point ($T_m$):

These temperatures are measured with a differential scanning calorimeter (DSC-Model 20, manufactured by SEIKO DENSHI KOGYO). About 10 mg of a polymer obtained is weighed precisely on an aluminium pan, and the temperature is programmed from 50 °C to 400 °C at a rate of 10 °C/min in a nitrogen gas stream. The peak at the first inflection point is regarded as the glass transition temperature ($T_g$), and the endothermic peak is regarded as the melting point ($T_m$).

Decomposition temperature:

Measurement is conducted with a differential thermal and thermogravimetric analyzer ($T_g$/DTA-Model 20, manufactured by SEIKO DENSHI KOGYO). About 10 mg of a polymer obtained is weighed precisely on a platinum pan. The temperature is programmed at a rate of 10 °C/min in an air gas stream, and a temperature at which 10 % of the weight of the polymer has been decreased is regarded as the decomposition temperature of it.

Tensile strength, elongation and tensile modulus:

Measurements are conducted with RTM-25rtm (manufactured by TOYO BOLDWIN CO.) in accordance with ASTM-D822-83. A film is cut into a size of 120 mm in length and 100 mm in width. The both ends with a distance of 10 mm of the test piece are fixed with and bonded to papers, and thickness is measured at five points to calculate the average of the five thicknesses as the thickness. The test piece is gripped with tester jaws, of which the distance is set to 100 mm. The load-elongation curve is recorded on applying a load 10 kg at a tensile rate of 50 mm/min to calculate the tensile strength and the elongation from the following equation:

$$\text{Tensile strength (kgf/mm}^2\text{)} = \text{Akgf/sectional area mm}^2,$$

$$\text{Elongation (\%)} = 100(\text{L mm} - 100\text{ mm})/100\text{ mm}.$$

A: Maximum load in the curve above.
L: Maximum length in the curve above.

A film is cut into a size of 270 mm in length and 10 mm in width. The both ends with a distance of 10 mm of the test piece are fixed with and bonded to papers, and thickness is measured at five points to calculate the average of the five thicknesses as the thickness. The test piece is gripped with tester jaws, of which the distance is set to 250 mm. The load-elongation curve is recorded on applying a load 10 kg at a tensile rate of 25 mm/min to calculate the tensile modulus:

$$\text{Tensile modulus (kgf/mm}^2\text{)} = \text{Bkgf}\cdot\text{250/sectional area mm}^2.$$

B: Load necessary to elongate.

Example 1

A 0.1 mole aqueous sodium hydroxide solution (160 ml) was placed into a three-necked flask equipped with a mechanical stirrer, and 1.164 g of hexamethylenediamine (10 mmole) and 0.6 g of sodium laurylsulfate were added to and dissolved into the solution. To the solution thus obtained was added at a time a solution of 1.265 g (5 mmole) of 2,6-naphthalene dicarboxylic acid dichloride and 1.265 (5 mmole) of 2,7-naphthalene dicarboxylic acid dichloride in chloroform with stirring, and the whole mixture was stirred at a stirring speed of 800 rpm for 10 minutes. The polymerization solution was then poured into acetone to deposit the polymer, which was separated by filtration, washed sufficiently with hot water and dried under a reduced pressure. A 3 g portion of the polymer thus obtained was dissolved completely into 20 ml of m-cresol, and the solution was cast over a glass plate, of which the surface had been cleaned, with a glass rod. The glass plate is kept horizontal in a vacuum dryer and dried at room temperature for 12 hours, at

10 °C for 12 hours, at 150 °C for 24 hours and further at 200 °C for 24 hours to form a film. The inherent viscosity η inh, the glass transition temperature $T_g$, the melting point, the thermal degradation temperature, the tensile strength, the elongation and the tensile modulus of polymers are summarized in Tables 2 and 3.

Examples 2 and 4, Comparative Examples 1 - 4

Reactions in Examples 2 and 4 and Comparative Examples 1 - 4 were conducted in accordance with Example 1 with use of the amounts of the starting materials as described in Table 1.

Table 1

| | | |
|---|---|---|
| Example 1 | 2,6-NDC*1 | 50 % |
| | 2,7-NDC*2 | 50 % |
| | Hexamethylenediamine | 100 % |
| Example 2 | 2,6-NDC | 30 % |
| | 2,7-NDC | 70 % |
| | Hexamethylenediamine | 100 % |
| Comparative Example 4 | 2,7-NDC | 50 % |
| | TPC*3 | 50 % |
| | Hexamethylenediamine | 100 % |
| Example 4 | 2,6-NDC | 50 % |
| | 2,7-NDC | 50 % |
| | Decamethylenediamine | 100 % |
| Comparative Example 1 | TPC | 50 % |
| | IPC*4 | 50 % |
| | Hexamethylenediamine | 100 % |
| Comparative Example 2 | IPC | 100 % |
| | Hexamethylenediamine | 100 % |
| Compartive Example 3 | 2,6-NDC | 100 % |
| | Hexamethylenediamine | 100 % |

*1 2,6-NDC = 2,6-Naphthalenedicarboxylic acid dichloride,
*2 2,7-NDC = 2,7-Naphthalenedicarboxylic acid dichloride,
*3 TPC = Terephthalic acid dichloride,
*4 IPC = Isophthalic acid dichloride.

Table 2

| | Aliphatic diamine | Composition of acid chlorides* (mole%) | | | | Viscosity η inh (dl/g) | Glass transiton temperature (°C) | Melting point (°C) | Decomposition temperature (°C) |
|---|---|---|---|---|---|---|---|---|---|
| | | 2,6-NDC | 2,7-NDC | IPC | TPC | | | | |
| Example 1 | Hexamethylene diamine | 50 | 50 | - | - | 0.85 | 153 | 319 | 400 |
| Example 2 | | 30 | 70 | - | - | 0.52 | 142 | 269 | 420 |
| Comparative Example 4 | | - | 50 | - | 50 | 0.87 | 144 | 287 | 430 |
| Example 4 | Decamethylene diamine | 50 | 50 | - | - | 0.71 | 115 | 251 | 440 |
| Comparative Example 1 | Hexamethylene diamine | - | - | 50 | 50 | 1.40 | 129 | 270 | 420 |
| Comparative Example 2 | | - | - | 100 | - | 1.53 | 115 | 208 | 390 |
| Comparative Example 3 | | 100 | - | - | - | 0.77 | - | 394 | 400 |

* 2,6-NDC = 2,6-Naphthalenedicarboxylic acid dichloride,
2,7-NDC = 2,7-Naphthalenedicarboxylic acid dichloride,
IPC = Isophthalic acid dichloride,
TPC = Terephthalic acid dichloride.

Table 3

| | Aliphatic diamine | Composition of acid chlorides* (mole%) | | | | Tensile strength ($kgf/mm^2$) | Elon-gation (%) | Tensile modulus ($kgf/mm^2$) |
|---|---|---|---|---|---|---|---|---|
| | | 2,6-NDC | 2,7-NDC | IPC | TPC | | | |
| Example 1 | Hexamethylene-diamine | 50 | 50 | - | - | 12 | 8 | 350 |
| Comparative Example 1 | | - | - | 50 | 50 | 9 | 14 | 320 |
| Comparative Example 2 | | - | - | 100 | - | 10 | 11 | 340 |

* 2,6-NDC = 2,6-Naphthalenedicarboxylic acid dichloride,
2,7-NDC = 2,7-Naphthalenedicarboxylic acid dichloride,
IPC = Isophthalic acid dichloride,
TPC = Terephthalic acid dichloride.

The aromatic copolyamide of the present invention has a high glass transition temperature and has superior thermal

stability and is capable of melt molding. Moreover, it has a high strength and a high modulus of elasticity and thus can be used for a wide range of applications such as molded articles, film, fiber, paint, adhesive.

When the aromatic copolyamide of the present invention is intended to be used for these applications, it can be incorporated with reinforcing agents such as a glass fiber, a carbon fiber or asbestos, or additives such as a filling agent, a nucleating agent, a flame retardant, a pigment, an antioxidant, a heat stabilizer, an ultraviolet light absorber, a color protecting agent, a plasticizer, a lubricant or a mold release agent, or it can be also kneaded with the other thermoplastic resins.

## Claims

1. A process for producing an aromatic copolyamide which consists of 10-90 mole % of a repeating unit represented by the following formula:

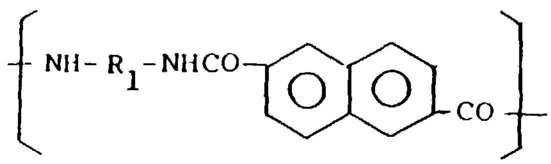

and 90-10 mole % of a repeating unit represented by the following formula:

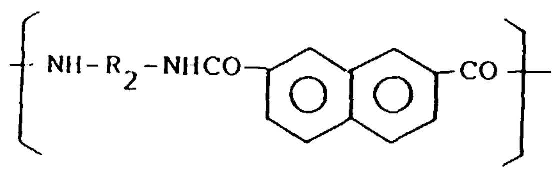

wherein $R_1$ and $R_2$ each is a group which is independently selected from a group consisting of aliphatic alkylene groups having 4-12 carbon atoms, said process comprising allowing an aqueous solution of one or more aliphatic diamines, represented by the formulae $H_2N$-$R_1$-$NH_2$ and $H_2N$-$R_2$-$NH_2$ to react with a solution of (a) 2,7-naphtalene dicarboxylic acid halide in an organic solvent which is mixable with the aqueous solution characterized in that the solution of (a) 2,7-naphtalene dicarboxylic acid halide comprises also (b) 2,6-naphtalene dicarboxylic acid halide, the ratio of (a) : (b)
being in the range 90-10 mol % : 90-10 mol % and the aqueous solution of diamines comprises sodium lauryl sulfate.

2. A process according to claim 1, characterized in that concentration of the diamines in the aqueous solution is in the range of 0.01-0.5 mol/l, preferably 0.03-0.2 mol/l.

3. A process according to claim 1 or 2, characterized in that the organic solvent is selected from the group of halogenated aliphatic hydrocarbons and aromatic hydrocarbons.

4. A process according to any of claims 1 to 3, characterized in that the total concentrations of (a) and (b) in the organic solvent are in the range of 0.01-0.5 mole/l, particularly 0.03-0.2 mol/l.

5. A process according to any of claims 1 to 4, characterized in that the aqueous solution contains a neutralizing agent.

6. A process according to claim 5, wherein the neutralizing agent to catch and neutralize hydrogen chloride as a by product of the polycondensation reaction is one of the following; sodium hydroxide, potassium hydroxide, calcium hydroxide, barium hydroxide, sodium carbonate, potassium carbonate, sodium hydrogen carbonate.

7. A process according to claim 5 or 6, characterized in that the concentration of the neutralizing agent in the aqueous solution is in the range of 0.05-1 mole, preferably 0.1-0.5 mole.

8. A process according to any of claim 1 to 7, characterized in that the reaction of the aqueous solution with the solution of (a) and (b) is carried out by the interfacial polycondensation method.

9. A process according to claim 1 or 2, characterized in that the organic solvent is selected from the group of dichloromethane chloroform, 1,2-dichloroethane, syn. tetrachloroethane, benzene, toluene, anisole, chlorobenzene, acetophenone, benzonitrile and nitrobenzene.

**10.** A process according to claim 1 or 2, characterized in that the organic solvent is selected from the group of chloroform and toluene.

**11.** A process according to claim 6, wherein the neutralizing agent is sodium hydroxide.

**Patentansprüche**

**1.** Verfahren zur Herstellung eines aromatischen Copolyamids, das aus 10 bis 90 Mol-% sich wiederholenden Einheiten, die durch die folgende Formel

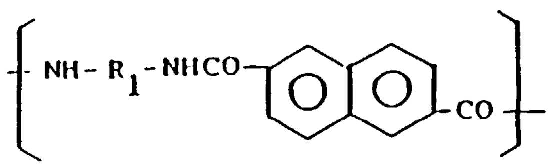

repräsentiert werden, und 90 bis 10 Mol-% sich wiederholenden Einheiten, die durch die folgende Formel

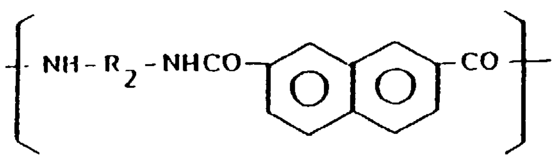

repräsentiert werden, besteht, worin $R_1$ und $R_2$ jeweils eine Gruppe darstellen, die unabhängig ausgewählt ist aus einer Gruppe, die aus aliphatischen Alkylengruppen mit 4 bis 12 Kohlenstoffatomen besteht, wobei das Verfahren darin besteht, daß eine wäßrige Lösung eines oder mehrerer aliphatischer Diamine, die durch die Formeln $H_2N-R_1-NH_2$ und $H_2N-R_2-NH_2$ repräsentiert werden, umgesetzt werden mit einer Lösung von (a) 2,7-Naphthalendicarbonsäure-halogenid in einem organischen Lösungsmittel, das mit der wäßrigen Lösung mischbar ist, dadurch gekennzeichnet, daß die Lösung von (a) 2,7-Naphthalendicarbonsäure-halogenid auch (b) 2,6-Naphthalendicarbonsäurehalogenid enthält, wobei das Verhältnis von (a):(b) im Bereich von 90-10 Mol-% : 90-10 Mol-% liegt, und die wäßrige Lösung der Diamine Natriumlaurylsulfat umfaßt.

**2.** Verfahren nach Anspruch 1, dadurch gekennzeichnet, daß die Konzentration der Diamine in der wäßrigen Lösung im Bereich von 0,01-0,5 Mol/l, vorzugsweise 0,03 -0,2 Mol/l liegt.

**3.** Verfahren nach Anspruch 1 oder 2, dadurch gekennzeichnet, daß das organische Lösungsmittel aus der Gruppe ausgewählt ist, die aus halogenierten aliphatischen Kohlenwasserstoffen und aromatischen Kohlenwasserstoffen besteht.

**4.** Verfahren nach einem der Ansprüche 1 bis 3, dadurch gekennzeichnet, daß die Gesamtkonzentrationen von (a) und (b) in dem organischen Lösungsmittel im Bereich von 0,01-0,5 Mol/l, vorzugsweise 0,03 -0,2 Mol/l liegen.

**5.** Verfahren nach einem der Ansprüche 1 bis 4, dadurch gekennzeichnet, daß die wäßrige Lösung ein Neutralisationsmittel enthält.

**6.** Verfahren nach Anspruch 5, worin das Neutralisationsmittel zum Abfangen und zur Neutralisation von Chlorwasserstoff als Nebenprodukt der Polykondensationsreaktion eines der folgenden ist: Natriumhydroxid, Kaliumhydroxid, Calciumhydroxid, Bariumhydroxid, Natriumcarbonat, Kaliumcarbonat, Natriumhydrogencarbonat.

**7.** Verfahren nach Anspruch 5 oder 6, dadurch gekennzeichnet, daß die Konzentration des Neutralisationsmittels in der wäßrigen Lösung im Bereich von 0,05-1 Mol, vorzugsweise 0,1-0,5 Mol liegt.

**8.** Verfahren nach einem der Ansprüche 1 bis 7, dadurch gekennzeichnet, daß die Reaktion der wäßrigen Lösung mit der Lösung (a) und (b) als Grenzflächen-Polykondensationsverfahren durchgeführt wird.

9. Verfahren nach Anspruch 1 oder 2, dadurch gekennzeichnet, daß das organische Lösungsmittel aus der Gruppe Dichlormethan, Chloroform, 1,2-Dichlorethan, syn. Tetrachlorethan, Benzen, Toluen, Anisol, Chlorbenzen, Acetophenon, Benzonitril und Nitrobenzen ausgewählt ist.

10. Verfahren nach Anspruch 1 oder 2, dadurch gekennzeichnet, daß das organische Lösungsmittel aus Gruppe Chloroform und Toluen ausgewählt ist.

11. Verfahren nach Anspruch 6, worin das Neutralisationsmittel Natriumhydroxid ist.

**Revendications**

1. Procédé de préparation d'un copolyamide aromatique, qui consiste en 10 à 90 % en mole d'un motif de récurrence représenté par la formule suivante :

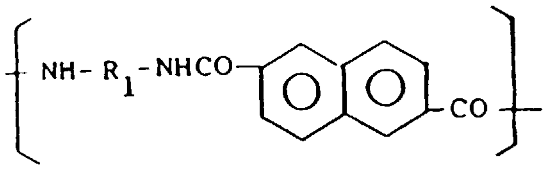

et de 90 à 10 % en mole d'un motif de récurrence représenté par la formule suivante :

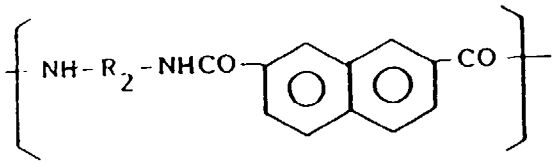

dans lesquelles $R_1$ et $R_2$ sont chacun un groupe qui est choisi indépendamment dans un groupe consistant en des groupes alcoylène aliphatiques ayant de 4 à 12 atomes de carbone, ce procédé consistant à mettre une solution aqueuse d'une diamine aliphatique ou de plusieurs diamines aliphatiques représentées par les formules $H_2N\text{-}R_1\text{-}NH_2$ et $H_2N\text{-}R_2\text{-}NH_2$ à réagir sur une solution de (a) un halogénure d'acide 2,7-naphtalène dicarboxylique dans un solvant organique qui est miscible à la solution aqueuse caractérisé en ce que la solution de (a) l'halogénure d'acide 2,7-naphtalène dicarboxylique comprend également (b) un halogénure d'acide 2,6 - naphtalène dicarboxylique, le rapport de (a) : (b) étant compris entre 90 à 10 % en mole : 90 à 10 % en mole et la solution aqueuse des diamines comprend du lauryle sulfate de sodium.

2. Procédé suivant la revendication 1, caractérisé en ce que la concentration des diamines dans la solution aqueuse est comprise entre 0,01 et 0,5 mole/l, et de préférence entre 0,03 et 0,2 mole/l.

3. Procédé suivant la revendication 1 ou 2, caractérisé en ce que le solvant organique est choisi dans le groupe des hydrocarbures aliphatiques halogénés et des hydrocarbures aromatiques.

4. Procédé suivant l'une quelconque des revendications 1 à 3, caractérisé en ce que les concentrations totales de (a) et (b) dans le solvant organique sont comprises entre 0,01 et 0,5 mole/l, et en particulier entre 0,03 et 0,2 mole/l.

5. Procédé suivant l'une quelconque des revendications 1 à 4, caractérisé en ce que la solution aqueuse contient un agent de neutralisation.

6. Procédé suivant la revendication 5, dans lequel l'agent de neutralisation destiné à fixer et à neutraliser du chlorure d'hydrogène en tant que sous-produit de la réaction de polycondensation est l'un des suivants : hydroxyde de sodium, hydroxyde de potassium, hydroxyde de calcium, hydroxyde de baryum, carbonate de sodium, carbonate de potassium, hydrogéno-carbonate de sodium.

7. Procédé suivant la revendications 5 ou 6, caractérisé en ce que la concentration de l'agent de neutralisation dans la solution aqueuse est comprise entre 0,05 et 1 mole, et de préférence entre 0,1 et 0,5 mole.

8. Procédé suivant l'une quelconque des revendications 1 à 7, caractérisé en ce que la réaction de la solution aqueuse sur la solution de (a) et (b) est effectuée par un procédé de polycondensation interfacial.

**9.** Procédé suivant la revendication 1 ou 2, caractérisé en ce que le solvant organique est choisi dans le groupe du dichlorométhane du chloroforme, du 1,2-dichloroéthane, du tétrachloroéthane syn., du benzène, du toluène, de l'anisole, du chlorobenzène, de l'acétophénone, du benzonitrile et du nitrobenzène.

**10.** Procédé suivant la revendication 1 ou 2, caractérisé en ce que le solvant organique est choisi dans le groupe du chloroforme et du toluène.

**11.** Procédé suivant la revendication 6, dans lequel l'agent de neutralisation est de l'hydroxyde de sodium.